# EUROPÄISCHE PATENTSCHRIFT

(11) **EP 2 111 181 B1**
(45) Veröffentlichungstag und Bekanntmachung des Hinweises auf die Patenterteilung: **06.03.2013**
(21) Anmeldenummer: 07847022.6
(22) Anmeldetag: 07.12.2007
(51) Int. Cl.: A61C 17/22

(54) **AUFSATZTEIL FÜR ZAHNBÜRSTE**
ATTACHMENT FOR TOOTHBRUSH
PARTIE EMBOUT POUR BROSSE À DENTS

(30) Priorität: 18.12.2006 DE 102006060133
(43) Veröffentlichungstag der Anmeldung: 28.10.2009
(73) Patentinhaber: Braun GmbH, 61476 Kronberg/Taunus (DE)
(72) Erfinder: KRESSNER, Gerhard, 63674 Altenstadt (DE)
(86) Internationale Anmeldenummer: PCT/EP2007/010673
(87) Internationale Veröffentlichungsnummer: WO 2008/074411

(56) Entgegenhaltungen:
- EP-B- 0 500 537
- WO-A-02/071970
- DE-A1- 10 352 993
- DE-C1- 19 717 334
- US-A- 3 851 984
- US-A- 3 927 435

## Beschreibung

Die vorliegende Erfindung betrifft eine elektrische Zahnbürste mit einem Handteil sowie einem darauf aufsetzbaren Aufsatzteil. Die Erfindung betrifft dabei insbesondere das Aufsatzteil für eine solche elektrische Zahnbürste, mit einem Arbeitskopf sowie einem mit dem Arbeitskopf verbundenen, rohrförmigen Anschlussstück, das auf ein Zahnbürstenhandteil aufsetzbar ist, wobei eine Aufsteckwelle zum Antreiben des Arbeitskopfs in dem Anschlussstück vorgesehen ist und eine Kupplungskontur zur formschlüssigen Kupplung mit einer an dem Zahnbürstenhandteil vorgesehenen Antriebswelle besitzt. Das vorgenannte Aufsatzteil kann dabei insbesondere eine Aufsatzbürste zur Zahnreinigung sein, in Betracht kommen jedoch auch Interdentalreiniger, Zahnfleischmassageköpfe oder andere Aufsatzwerkzeuge zur Verrichtung ähnlicher Aufgaben in der Mundhöhle.

Aus der EP 0 500 537 B1 ist eine elektrische Zahnbürste bekannt, bei der die Aufsatzbürste einerseits mit einem stirnseitigen Schaftteil des Zahnbürstenhandteils und andererseits mit einer daraus vorspringenden Antriebswelle verbunden wird. Die Aufsatzbürste weist hierzu radial federnde Rasthaken auf, die an entsprechenden handteilseitigen Rastausnehmungen verriegelbar sind.

Aus der DE 103 52 993 A1 ist weiterhin eine elektrische Zahnbürste bekannt, bei der die Aufsatzbürste nur direkt an der stirnseitig aus dem Zahnbürstenhandteil vorspringenden Antriebswelle befestigt ist. Die Aufsatzbürste weist hierzu ein Anschlussstück mit einer sacklochartigen Innenausnehmung auf, in die eine insgesamt hülsenförmige Aufnahme eingesetzt ist. Die besagte Aufnahme, in die die Antriebswelle passgenau einsteckbar ist, weist dabei mehrere Federelemente auf, die radial federnd ausgebildet sind und eine spielfreie Verbindung zwischen der Aufsatzbürste und der Antriebswelle sicherstellen sollen.

Bei Befestigung des Aufsatzteils an dem stirnseitig vorspringenden Gehäusestumpf des Zahnbürstenhandteils ist es auch bekannt, das rohrförmige Anschlussstück des Aufsatzteils einfach so fest auf den Stumpf aufzuschieben, bis es dort reibschlüssig festklemmt. Um hier ein Lösen der Verbindung durch die Vibrationen des Antriebs der elektrischen Zahnbürste und die Putzkräfte zu vermeiden, darf jedoch nur eine sehr schwache Konizität verwendet werden, um eine Selbsthemmung der Klemmung zu erreichen. Andererseits wäre es wünschenswert, an dem Stumpf bzw. dem Hals des Zahnbürstenhandteils bzw. hierzu komplementär an dem Aufsatzteil eine stärkere Konizität vorzusehen, um eine toleranzunempfindlichere Verbindung erreichen zu können.

Ähnliches gilt für die Verbindung zwischen der handteilseitigen Antriebswelle und der aufsatzteilseitigen Aufsteckwelle. Auch hier wäre es wünschenswert, an der Kupplungskontur der Antriebswelle und dazu komplementär an der aufsatzteilseitigen Aufsteckwelle eine stärkere Konizität vorzusehen, um eine toleranzunempfindlichere Verbindung erreichen zu können.

Hiervon ausgehend liegt der vorliegenden Erfindung die Aufgabe zugrunde, eine verbesserte Zahnbürste, ein verbessertes Zahnbürstenhandteil sowie ein verbessertes Aufsatzteil hierfür zu schaffen, die Nachteile des Standes der Technik vermeiden und letzteren in vorteilhafter Weise weiterbilden. Insbesondere soll eine einfach zu kuppelnde Verbindung zwischen der Aufsteckwelle des Aufsatzteils und der Antriebswelle des Zahnbürstenhandteils geschaffen werden, die toleranzunempfindlich ist, die beiden Abschnitte des Antriebsstrangs vorzugsweise spielfrei kuppelt und doch in einfacher Weise zu lösen und wieder herzustellen ist. Vorzugsweise soll dabei das Aufsatzteil mit verschiedenen Zahnbürstenhandteilen mit unterschiedlichen Antriebswellengestaltungen verwendbar sein.

Erfindungsgemäß wird diese Aufgabe durch ein Aufsatzteil gemäß Anspruch 1 sowie eine Zahnbürste gemäß Anspruch 27 gelöst. Bevorzugte Ausgestaltungen der Erfindung sind Gegenstand der abhängigen Ansprüche.

Es wird nach der vorliegenden Erfindung vorgeschlagen, an dem Aufsatzteil ein in Aufsatzteillängsrichtung axial bewegliches Kupplungsteil vorzusehen und dessen Axialbewegung in eine Entriegelungs- bzw. Verriegelungsbewegung der Kupplung des Antriebsstranges quer zur Aufsatzteillängsrichtung umzusetzen. Hierdurch kann einerseits eine feste, auch gegenüber Vibrationen unempfindliche Verbindung zwischen dem Aufsatzteil und dem Zahnbürstenhandteil erreicht werden, andererseits kann weiterhin ein Lösen der Verbindung bzw. ein Herstellen der Verbindung durch die an sich bekannte axiale Steck- bzw. Abziehbewegung erreicht werden. Erfindungsgemäß sind ein quer bewegliches Eingriffsteil der Kupplungskontur der aufsatzteilseitigen Aufsteckwelle und/oder ein an dem Anschlußstück des Aufsatzteils vorgesehenes Betätigungsteil in Aufsatzteillängsrichtung bewegbar, wobei das Eingriffsteil mit dem Betätigungsteil in Eingriff bringbar ist derart, dass eine Bewegung des Betätigungsteils und/oder des Eingriffsteils in Aufsatzteillängsrichtung eine Ent- oder Verriegelungsbewegung des Eingriffsteils quer zur Aufsatzteillängsrichtung erzeugt. Ist die Kupplungskontur der Aufsteckwelle des Aufsatzteils mit der Antriebswelle des Zahnbürstenhandteils verriegelt, wird zunächst das Aufsatzteil bzw. ein damit verbundenes Betätigungsstück axial im wesentlichen in Aufsatzteillängsrichtung gegenüber der verriegelten Kupplungskontur bewegt, wodurch sich das Eingriffsteil der Kupplungskontur quer zur Zahnbürstenlängsrichtung entriegelt, so dass die Aufsteckwelle von der Antriebswelle des Zahnbürstenhandteils zusammen mit dem Aufsatzteil abgezogen werden können. Dieser Befestigungs- bzw. Verbindungsmechanismus gestattet es, an der Schnittstelle des Antriebsstrangs auch nicht selbsthemmende, insbesondere stärker konische Verbindungs- bzw. Passungskonturen vorzusehen, da eine Fixierung trotzdem durch die quer zur Aufsatzteillängsrichtung erfolgende Verriegelungsbewegung sichergestellt ist. Hierdurch kann insbesondere die in dieser Hinsicht sonst problematische Schnittstelle des Antriebsstrangs toleranzunempfindlich gemacht werden.

Um eine einfache Bedienung des Aufsatzteils zu erreichen und wie bislang das Aufsatzteil einfach von dem Zahnbürstenhandteil abziehen zu können, ist in Weiterbildung der Erfindung vorgesehen, dass das Betätigungsteil einen Entriegelungsabschnitt besitzt, der derart angeordnet und ausgebildet ist, dass bei einer Axialbewegung des Betätigungsteils von dem Arbeitskopf weg der Entriegelungsabschnitt mit dem Eingriffsteil der Aufsteckwelle in Eingriff bringbar ist und den Eingriffsabschnitt in eine entriegelte Stellung zwingt. Mit anderen Worten ist das Betätigungsteil derart angeordnet und ausgebildet, dass das Betätigungsteil beim Abziehen des Aufsatzteils vom Zahnbürstenhandteil den Kupplungseinsatz automatisch entriegelt.

Nach einer bevorzugten Ausführung der Erfindung kann an dem Eingriffsabschnitt der Kupplungskontur der Aufsteckwelle und/oder dem Betätigungsteil eine Keilfläche vorgesehen sein, die beim Auflaufen des Eingriffsabschnitts auf das Betätigungsteil die gewünschte Entriegelungsbewegung erzeugt. Dabei kann ein ebenes Keilflächenpaar vorgesehen sein, jedoch auch ein ballig oder konkav gewölbtes Schrägflächenpaar nach Art eines Nockens bzw. einer nockenartigen Steuerfläche einerseits und einem darauf ablaufenden Betätigungsglied Verwendung finden, welches beim Auflaufen des Eingriffsabschnitts auf das Betätigungsteil in Folge der axialen Relativbewegung letztere in eine Entriegelungsbewegung quer zur Axialrichtung umsetzt.

In kinematischer Umkehrung kann grundsätzlich auch vorgesehen sein, dass das Betätigungsteil nicht die Entriegelung, sondern die Verriegelung der Kupplungskontur der Aufsteckwelle bzw. des damit verbundenen Eingriffsabschnitts bewirkt. In diesem Fall kann der Eingriffsabschnitt in seiner Ausgangsstellung eine nicht verriegelnde Stellung einnehmen bzw. in diese vorgespannt sein. Wird das Aufsatzteil auf das Zahnbürstenhandteil aufgesetzt, wird über das Betätigungsteil der Eingriffsabschnitt der Kupplung in seine verriegelnde Stellung gezwungen. Bevorzugt ist jedoch die zuvor beschriebene Ausführung der Erfindung, wonach die Kupplungskontur der Aufsteckwelle selbstverriegelnd ausgebildet ist und die beim Aufsetzen auf das Zahnbürstenhandteil von selbst erfolgende Verriegelung mittels des Betätigungsteils beim erneuten Abziehen dann gelöst wird.

In besonders vorteilhafter Ausführung der Erfindung kann der Eingriffsabschnitt einen Schnapper und/oder einen Rastklips bilden, der beim Aufstecken des Anschlussstücks auf das Zahnbürstenhandteil über das Verbindungsstück der Antriebswelle des Zahnbürstenhandteils gleitet, dabei elastisch wegfedert und bei Erreichen der gänzlich aufgesteckten Stellung formschlüssig einschnappt. Soll das Aufsatzteil vom Zahnbürstenhandteil wieder abgenommen werden, wird der Schnapper bzw. Rastklips durch eine axiale Relativbewegung zwischen dem Betätigungsteil und dem Schnapper bzw. Rastklips aus seiner eingeschnappten Stellung ausgehoben.

Der Eingriffsabschnitt kann dabei grundsätzlich verschieden ausgebildet sein. Nach einer vorteilhaften Ausführung der Erfindung kann der Eingriffsabschnitt eine Rastkontur insbesondere in Form eines Rasthakens aufweisen, die am auskragenden Ende eines Eingriffsfingers vorgesehen ist, der vorteilhafterweise federnd ausgebildet und/oder um eine Querachse schwenkbar ist und von dem Betätigungsteil radial bewegbar ist. Vorteilhafterweise kann der zumindest eine Eingriffsfinger dabei integral einstückig am Korpus des Kupplungsabschnitts der Aufsteckwelle angeformt und gegenüber dem restlichen Korpus beispielsweise durch längsschlitzförmige Ausnehmungen getrennt sein, um gegenüber dem restlichen Korpus federn zu können. Der Eingriffsfinger kann auch Teil eines separaten, an der Aufsteckwelle befestigten Kupplungsaufsatzes sein.

Alternativ oder zusätzlich kann auch ein Eingriffsabschnitt in Form einer Wippe vorgesehen sein, die an ihrem einen Ende eine geeignete Rastkontur, insbesondere in Form eines Rasthakens zur Verriegelung mit dem Zahnbürstenhandteil, trägt und an ihrem anderen Ende einen Betätigungsabschnitt bildet, der mit dem vorgenannten Betätigungsteil in Eingriff bringbar ist. Auch in diesem Fall kann der Eingriffsabschnitt integral einstückig an dem Korpus des Kupplungseinsatzes angeformt sein, insbesondere über einen biegsamen Verbindungssteg im Mittelabschnitt der vorgenannten Wippe.

Eine weitere vorteilhafte Ausführung der Erfindung kann darin bestehen, dass an der Aufsteckwelle ein geschlitzter Rastring vorgesehen ist, der radial zusammenfahren und sich aufweiten kann. Ein Zusammendrücken kann hierbei insbesondere durch Vorspannung des Rastrings erzielt werden, während umgekehrt ein Auseinanderfahren bzw. Aufweiten des Rastrings beispielsweise über ein Schrägflächenpaar an dem Rastring und dem vorgenannten Betätigungteil erzielt werden kann.

Das Betätigungsteil zur Ent- oder ggf. Verriegelung der Kupplung des Antriebsstrangs kann unterschiedlich ausgebildet sein. Vorteilhafterweise ist das Betätigungsteil dabei automatisch arbeitend ausgebildet, so dass es beim Abziehen bzw. Aufstecken des Aufsatzteils automatisch arbeitet und das Eingriffsteil der Antriebsstrangkupplung hierbei selbsttätig entriegelt bzw. verriegelt.

In besonders vorteilhafter Weiterbildung der Erfindung kann das Betätigungsteil mit einem Kupplungseinsatz verbunden, insbesondere daran integral einstückig angeformt sein, welcher in dem rohrförmigen Anschlussstück des Aufsatzteils angeordnet und dazu vorgesehen ist, mit dem Hals des Zahnbürstenhandteils form- und/oder reibschlüssig verriegelt zu werden, um das Aufsatzteil am Zahnbürstenhandteil zu halten. Dieser Kupplungseinsatz des Aufsatzteils ist dabei vorteilhafterweise relativ zu dessen Anschlußstück axial in Aufsatzteillängsrichtung verschiebbar sowie mit einem Eingriffsabschnitt, der mit dem Hals des Zahnbürstenhandteils form- bzw. reibschlüssig verriegelbar ist, derart verbunden, dass der Kupplungseinsatz beim Abziehen und/oder beim Aufstecken des Aufsatzteils vom bzw. auf das Zahnbürstenhandteil eine Axialbewegung in Aufsatzteillängsrichtung relativ zum rohrförmigen Anschlussstück des Aufsatzteils erfährt. Durch diese Ausführung wird beim Abziehen bzw. Aufstecken des Aufsatzteils automatisch auch eine axiale Stellbewegung des Betätigungsteils für die Antriebswellenkupplung erzeugt, welche dabei in die Stellbewegung des Eingriffsteils der Antriebsstrangkupplung quer zur Aufsatzteillängsachse umgesetzt wird.

Das Betätigungsteil kann dabei insbesondere in Form eines Zughakens ausgebildet sein, der an dem vorzugsweise hülsenförmigen Kupplungseinsatz stirnseitig vorspringt und bis zur Antriebsstrangkupplung ragt, um dort mit dem Eingriffsteil der Kupplungskontur der Aufsteckwelle in Eingriff zu gelangen.

Dabei kann das Aufsatzteil vorteilhafterweise auch hinsichtlich des genannten Kupplungseinsatzes derart ausgebildet sein, dass die axiale Bewegung des Kupplungseinsatzes relativ zum Anschlussstück und/oder einem daran vorgesehenen Betätigungsstück eine Entriegelungs- und/oder Verriegelungsbewegung des Eingriffsabschnitts des Kupplungseinsatzes quer zur Aufsatzteillängsrichtung erzeugt. Ist der Kupplungseinsatz bzw. dessen Eingriffsabschnitt mit dem Zahnbürstenhandteil verriegelt, muss zunächst das Aufsatzteil bzw. ein damit verbundenes Betätigungsstück axial im wesentlichen in Aufsatzteillängsrichtung gegenüber dem verriegelten Kupplungseinsatz bewegt werden, wobei sich dieser zunächst aufgrund seiner Verriegelung an dem Zahnbürstenhandteil gegenüber letzterem nicht bewegt. Erst wenn die axiale Relativbewegung die Verriegelung gelöst hat, kann der Kupplungseinsatz von dem Zahnbürstenhandteil zusammen mit dem Aufsatzteil abgezogen werden. Dieser zweistufige Befestigungs- bzw. Verbindungsmechanismus gestattet es, an der Schnittstelle zwischen dem Zahnbürstenhandteil und dem Kupplungseinsatz auch nicht selbsthemmende Verbindungs- bzw. Passungskonturen vorzusehen, da eine Fixierung trotzdem durch die quer zur Aufsatzteillängsrichtung erfolgende Verriegelungsbewegung sichergestellt ist.

Alternativ zur Befestigung des Betätigungsteils der Antriebsstrangkupplung an einer solchen Kupplungshülse könnte das Betätigungsteil grundsätzlich auch separat von den Verbindungsmitteln des rohrförmigen Anschlußstücks am Handteilhals ausgebildet sein. Beispielsweise könnte das Betätigungsteil in Form eines am Anschlußstück verschieblich gelagerten Schiebers ausgebildet sein, der vorzugsweise einen Fingerbetätigungsabschnitt aufweist und/oder bspw. von einem Daumen in Aufsatzteillängsrichtung gegenüber dem rohrförmigen Anschlußstück verschoben werden kann, um die Antriebsstrangkupplung zu lösen bzw. zu verriegeln.

Die Kupplungskontur der Antriebsstrangkupplung kann grundsätzlich verschiedene Formgebungen besitzen. Insbesondere kann die Kupplungskontur der Aufsteckwelle eine sich vom Arbeitskopf des Aufsatzteils weg erweiternde, konische Aufnahme definieren, die einen Schrägungswinkel von mehr als 7° aufweist und dementsprechend nicht mehr selbsthemmend ausgebildet ist, wobei in entsprechender Weise das üblicherweise stirnseitig vorspringende, stumpfförmige Verbindungsstück der Antriebswelle des Zahnbürstenhandteils in entsprechender Weise konisch mit einem Schrägungswinkel von mehr als 7° ausgebildet sein kann. Sozusagen in Kinematischer Umkehrung ist es grundsätzlich auch möglich, diese Anordnung umzudrehen und an der handteilseitigen Antriebswelle eine vorzugsweise in der genannten Art konische Aufnahme vorzusehen, in die die dann vorteilhafterweise ebenfalls konische Aufsteckwelle des Aufsatzteils einsteckbar ist. Bevorzugt ist jedoch die zuvor genanten Anordnung mit der Aufnahme an der Aufsteckwelle. Durch die genannte relativ starke Konizität des Verbindungsstücke der beiden Wellen wird die Verbindung toleranzunempfindlich, da ein etwaiger Durchmesserunterschied durch eine entsprechende Axialbewegung kompensiert werden kann.

Eine solche konische Ausbildung der Schnittstellen-Passflächen der Antriebsstrangkupplung ist insbesondere in Verbindung mit der zuvor beschriebenen Verriegelung der beiden Wellenstücke mittels eines quer zur Aufsatzteillängsrichtung bewegbaren Eingriffsteils vorteilhaft, da eine solche Verriegelung ein ungewolltes Lösen der miteinander zusammenwirkenden Kupplungskonturen auch bei nicht selbsthemmender Ausbildung verhindert. Trotzdem kann durch das konische Passflächenpaar toleranzunempfindlich eine feste und spielfreie Wellenverbindung erzielt werden.

Alternativ oder zusätzlich kann die genannte konische Ausbildung der Passflächen der Antriebsstrangschnittstelle jedoch auch mit einer Verriegelung des rohrförmigen Anschlussstücks der Aufsatzbürste an dem Hals des Zahnbürstenhandteils vorteilhafte Verwendung finden. Durch eine form- und/oder reibschlüssige Verriegelung des rohrförmigen Anschlussstücks am Zahnbürstenhandteil werden auch die Kupplungskonturen der Aufsteckwelle und der Antriebswelle sicher aufeinander gehalten, ohne dass ein unbeabsichtigtes Lösen möglich ist. Insbesondere ist es in diesem Falle von Vorteil, wenn die Kupplungskonturen der beiden Wellenstücke aufeinander zu in ihre kuppelnde Stellung vorgespannt sind, was beispielsweise dadurch erreicht werden kann, dass die Antriebswelle in dem Zahnbürstenhandteil axial verschiebbar geführt und in Richtung auf die Aufsatzbürste zu mittels einer geeigneten Federeinrichtung vorgespannt ist. Alternativ oder zusätzlich kann auch die Aufsteckwelle in der Aufsatzbürste, oder zumindest das die Kupplungskontur tragende Endstück vom Arbeitskopf der Aufsatzbürste weg, d.h. auf das Zahnbürstenhandteil zu, durch eine geeignete Feder vorgespannt sein. Beispielsweise kann hierzu die Aufsteckwelle nach Art einer Teleskopwelle zwei ineinander und auseinander schiebbare Wellenstücke aufweisen.

Eine besonders einfach herstellbare Ausbildung der Kupplungskonturen an der Aufsteckwelle und/oder der Antriebswelle kann dadurch verwirklicht werden, dass die Kupplungskontur der Aufsteckwelle und die dazu komplementäre Kupplungskontur der Antriebswelle jeweils frei von Hinterschneidungen und frei von axial wirksamen Verrastungen ausgebildet sind. Die beiden Wellenstücke werden also lediglich ineinander gesteckt, wobei die konische, insbesondere nicht rotationssymmetrische Passfläche die Drehmomentübertragung ermöglicht. Die axiale Sicherung der Kupplungskonturen aufeinander wird hierbei durch die zuvor beschriebene Verriegelung des rohrförmigen Anschlussstückaufsatzteils auf dem Hals des Zahnbürstenhandteils sichergestellt.

In weiterhin bevorzugter Weiterbildung der Erfindung ist die Aufsteckwelle des Aufsatzteils alternativ oder zusätzlich zu den zuvor beschriebenen Merkmalen des Aufsatzteils hinsichtlich ihres Kupplungsabschnitts derart ausgebildet, dass sie mit unterschiedlich ausgebildeten Zahnbürstenhandteilen, genauer gesagt mit unterschiedlich ausgebildeten Antriebswellen solcher Zahnbürstenhandteile, kuppelbar ist.

Insbesondere kann die Aufsteckwelle des Aufsatzteils zwei separate, voneinander unabhängig wirksame Kupplungskonturen zur jeweils formschlüssigen Kupplung mit unterschiedlich ausgebildeten Antriebswellen verschiedener Zahnbürstenteile aufweisen. Separat und voneinander unabhängig wirksam meint dabei vorteilhafterweise, dass eine mit der Aufsteckwelle zu kuppelnde Antriebswelle des Zahnbürstenhandteils mit jeweils nur einer der beiden Kupplungskonturen in kraft- bzw. drehmomentübertragenden Eingriff gebracht wird. In Weiterbildung der Erfindung besitzt dabei eine erste der beiden Kupplungskonturen ein quer zur Aufsatzteillängsrichtung bewegbares Eingriffsteil zur form- und/oder reibschlüssigen Verriegelung mit der Antriebswelle des Zahnbürstenhandteils, während eine zweite der beiden Kupplungskonturen eine konische Passfläche zum Eingriff mit einer ebenfalls konischen Passfläche an der Antriebswelle des Zahnbürstenhandteils aufweist, die frei von Hinterschneidungen und frei von axial wirksamen Verrastungen ausgebildet ist. Insbesondere kann die erste der beiden Kupplungskonturen in der zuvor beschriebenen Weise ausgebildet sein und als quer bewegbares Eingriffsteil beispielsweise einen Rastfinger, einen geteilten Rastring oder ein Schwenkteil aufweisen, welches über das axial bewegbare Betätigungsteil insbesondere in Form eines an der zuvor beschriebenen Kupplungshülse befestigten Zughakens betätigt werden kann. Die zweite der beiden Kupplungskonturen kann in der zuvor beschriebenen Weise vorteilhafterweise nicht-selbsthemmend ausgebildet sein und eine Konizität mit einem Schrägungswinkel von mehr als 7° besitzen.

Die Erfindung wird nachfolgend anhand bevorzugter Ausführungsbeispiele und zugehöriger Zeichnungen näher erläutert.

In den Zeichnungen zeigen:
- Fig. 1:: einen ausschnittsweisen Längsschnitt durch eine elektrische Zahnbürste nach einer bevorzugten Ausführung der Erfindung, der das stirnseitige Verbindungsstück des Zahnbürstenhandteils und die darauf sitzende Aufsatzbürste zeigt,
wobei der in dem rohrförmigen Anschlussstück der Aufsatzbürste sitzende Kupplungseinsatz in seiner verriegelten Stellung gezeigt ist,
- Fig. 2:: einen Längsschnitt durch die Zahnbürste aus Fig. 1, der gegenüber der Darstellung der Fig. 1 um 90° gedreht ist,
- Fig. 3:: einen Querschnitt durch die Zahnbürste aus den Figuren 1 und 2 im Bereich der Verrastung zwischen dem Kupplungseinsatz in der Aufsatzbürste und dem Hals des Zahnbürstenhandteils,
- Fig. 4:: ein vereinfachter, vergrößerter ausschnittsweiser Längsschnitt durch die elektrische Zahnbürste aus den Figuren 1 bis 3, der die Verbindung der Aufsteckwelle der Aufsatzbürste mit der Antriebswelle des Handteils der Zahnbürste näher zeigt,
- Fig. 5:: eine ausschnittsweise Schnittansicht der Antriebsstrangkupplung im Anschlussstück einer Aufsatzbürste nach einer weiteren bevorzugten Ausführung der Erfindung, bei der die Kupplung einen schwenkbar gelagerten Verriegelungsarm mit einem nockenartigen Betätigungsteil aufweist,
- Fig. 6:: eine ausschnittsweise Schnittansicht der Antriebsstrangkupplung im Anschlussstück einer Aufsatzbürste nach einer weiteren bevorzugten Ausführung der Erfindung, bei der die Kupplung einen schwenkbar gelagerten Verriegelungsarm aufweist, der auf einer dem Zughaken des Betätigungsteils gegenüberliegenden Seite an einem Federteil schwenkbar gelagert ist,
- Fig. 7:: eine ausschnittsweise Schnittansicht der Antriebsstrangkupplung im Anschlussstück einer Aufsatzbürste nach einer weiteren bevorzugten Ausführung der Erfindung, bei der die Kupplung einen schwenkbar gelagerten Verriegelungsarm aufweist, bei dem der Zughaken des Betätigungsteils auf einer dem Rastvorsprung des Verriegelungsarms gegenüberliegenden Seite angreift,
- Fig. 8:: eine ausschnittsweise Schnittansicht der Antriebsstrangkupplung im Anschlussstück einer Aufsatzbürste nach einer weiteren bevorzugten Ausführung der Erfindung, bei der die Kupplung einen geteilten aufweitbaren Rastring aufweist,
- Fig. 9:: einen ausschnittsweisen Längsschnitt durch eine elektrische Zahnbürste nach einer Ausführung, welche nicht Teil der Erfindung, ist bei der allein der Kupplungseinsatz in dem Anschlussstück der Aufsatzbürste mit dem Zahnbürstenhandteil verriegelt wird, während die Antriebsstrangkupplung aus jeweils konischen, nicht-selbsthemmend ausgebildeten Paßflächen ohne axiale Verriegelung besteht,
- Fig. 10:: einen ausschnittsweisen Längsschnitt durch die Zahnbürste aus Fig. 9 in einer gegenüber Fig. 9 um 90° gedrehten Ebene, und
- Fig. 11:: einen Querschnitt durch die Verbindung zwischen der Aufsatzbürste und dem Handteil der Zahnbürste aus den Figuren 9 und 10 im Bereich der Rasthaken des Kupplungseinsatzes.

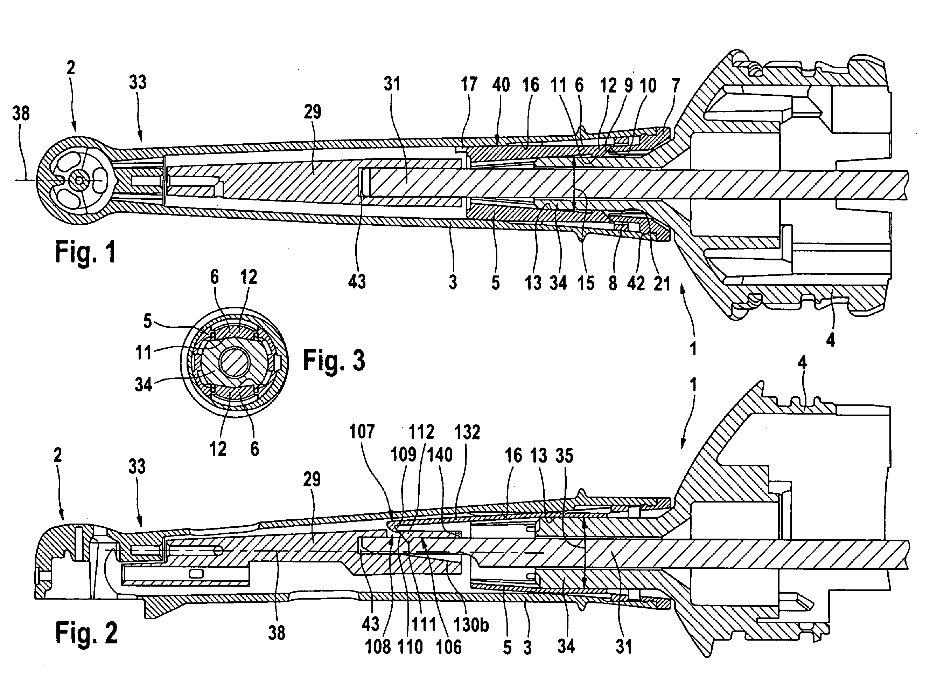

Die in den Figuren 1 bis 3 gezeigte Zahnbürste 1 umfasst ein Handteil 4 sowie ein damit verbundenes Aufsatzteil in Form einer Aufsatzbürste 33. Das Handteil 4 umfasst in an sich bekannter Weise ein Gehäuse, in dem ein Antriebsmotor und eine Energieversorgungseinrichtung, beispielsweise in Form eines Akkus, aufgenommen sind und an dem ein Betätigungsschalter zum Ein- und Ausschalten des Antriebs vorgesehen ist. An dem in Figur 1 gezeigten stirnseitigen Ende des Handteils 4 bildet das Gehäuse des Handteils 4 ein stirnseitig vorspringendes, stumpfförmiges Verbindungsstück 34, das in der gezeichneten Ausführungsform konisch ausgebildet ist und sich zu seinem freien Ende hin verjüngt, wobei die konische Kontur des Verbindungsstücks 34 vorteilhafterweise einen Schrägungswinkel 35 von mehr als 7° besitzt und somit nicht selbsthemmend klemmbar ist. Aus dem genannten Verbindungsstück 34 tritt stirnseitig eine Antriebswelle 31 heraus, die rotatorisch oszillierend antreibbar ist.

Die Aufsatzbürste 33 umfasst einen Arbeitskopf 2 mit einem nicht näher dargestellten Borstenfeld, das in der gezeichneten Ausführung um eine etwa in Borstenlängsrichtung weisende Borstenfeldachse rotatorisch oszillierend antreibbar ist. Der besagte Arbeitskopf 2 wird von einem insgesamt rohrförmigen Anschlussstück 3 getragen, das auf den Hals bzw. das Verbindungsstück 34 des Zahnbürstenhandteils 4 aufsteckbar ist. Im Inneren des genannten rohrförmigen Anschlussstücks 3 umfasst die Aufsatzbürste 33 eine Aufsteckwelle 29, die mit der handteilseitigen Antriebswelle 31 drehfest kuppelbar ist, wie noch näher erläutert wird.

Zur Befestigung der Aufsatzbürste 33 an dem Handteil 4 ist zunächst in dem rohrförmigen Anschlussstück 3 ein Kupplungseinsatz 5 in Form einer Kupplungshülse vorgesehen, die in dem rohrförmigen Anschlussstück 3 axial in Richtung der Aufsatzteillängsrichtung 38 verschieblich aufgenommen ist. Das Anschlussstück 3 bildet hierbei mit seiner Innenwandung eine Einsatzaufnahme 16, in der der Kupplungseinsatz 5 zumindest in seinem verriegelten Zustand, der noch näher beschrieben wird, passgenau sitzt. Die Einsatzaufnahme 16 kann dabei grundsätzlich verschieden ausgebildet sein, beispielsweise insgesamt zylindrisch oder insgesamt kegelig bzw. konisch ausgebildet sein, oder auch einen zylindrischen Abschnitt sowie einen konischen Abschnitt aufweisen. In der gezeichneten Ausführung ist die Einsatzaufnahme 16 insgesamt leicht konisch ausgebildet, wobei an ihrem für das innere Ende des Kupplungseinsatzes 5 bestimmten Bereich 40 ein zylindrischer Abschnitt vorgesehen ist.

Der Kupplungseinsatz 5 ist dabei vorteilhafterweise durch eine der Übersichtlichkeit halber in der Figur nicht gezeigte Feder axial in dem Anschlussstück 3 gehalten bzw. in eine vorbestimmte Ausgangslage vorgespannt. Die besagte Feder kann dabei vorteilhafterweise auf der dem Arbeitskopf 2 zugewandten Seite des Kupplungseinsatzes 5 vorgesehen und einerseits mit besagtem Kupplungseinsatz 5 verbunden und andererseits an dem Anschlussstück 3 fixiert sein.

Der hülsenförmige Kupplungseinsatz 5 bildet mit seiner Innenmantelfläche eine Aufnahme 13, die an die Außenumfangskontur des Verbindungsstücks 34 des Zahnbürstenhandteils 4 formangepasst ist, so dass letzteres passgenau in die Aufnahme 13 einsetzbar ist. Die Aufnahme 13 ist hierzu insgesamt konisch ausgebildet, wobei der Schrägungswinkel der entsprechenden Konizität - angepasst an das Verbindungsstück 34 - mehr als 7° beträgt. Der Kupplungseinsatz 5 weist dabei zwei einander gegenüberliegende Eingriffsabschnitte 6 in Form von federnd ausgebildeten Kupplungs- bzw. Federfingern 12 auf, die integral einstückig an den restlichen Korpus des Kupplungseinsatzes 5 angeformt sind und gegenüber letzterem durch U-förmige, schlitzförmige Einschnitte abgetrennt sind, so dass Eingriffsfinger 12 radial quer zur Aufsatzteillängsrichtung 38 auf- und zufedern können. Die Eingriffsfinger 12 erstrecken sich dabei mit ihrer Längsachse im wesentlichen parallel zu der Aufsatzteillängsrichtung 38.

Wie Figur 1 zeigt, tragen die Eingriffsfinger 12 an ihren freien Enden radial nach innen vorspringende Rasthaken 11, die in daran formangepasste Rastausnehmungen 41 in der Au-βenmantelfläche des Verbindungsstücks 34 des Zahnbürstenhandteils 4 einrasten können. Es versteht sich, dass hier auch andere, geeignete Rastkonturen vorgesehen sein könnten, beispielsweise eine geometrische Umkehrung der gezeichneten Ausführung mit Rastvorsprüngen an dem Verbindungsstück 34 und Rastausnehmungen an den Eingriffsfingern 12.

Wie Figur 3 zeigt, sind das Verbindungsstück 34 und die von dem Kupplungseinsatz 5 definierte Aufnahme 13 im Querschnitt nicht kreisförmig ausgebildet, sondern jeweils flachgedrückt. Insbesondere besitzt das Verbindungsstück 34 zwei einander gegenüberliegende Abflachungen, im Bereich derer die Rastausnehmungen 41 vorgesehen sind. Die Eingriffsfinger 12 sind mit ihrer Innenseite komplementär zu den beiden Abflachungen und der darin vorgesehenen Rastausnehmungen 41 ausgebildet.

Um die in Figur 1 gezeigte Verriegelung zwischen dem Kupplungseinsatz 5 und dem Verbindungsstück 34 des Zahnbürstenhandteils 4 lösen zu können, ist an dem Anschlussstück 3 der Aufsatzbürste 33 ein Betätigungsstück 7 in Form eines Ringes vorgesehen, der in der gezeichneten Ausführung am dem Arbeitskopf 2 abgewandten stirnseitigen Ende des rohrförmigen Anschlussstücks 3 sitzt. Der Ring kann hierbei vorteilhafterweise als Farbring ausgebildet sein, so dass er die Doppelfunktion erfüllt, die Aufsatzbürste 33 zu individualisieren, so dass ein jeweiliger Benutzer "seine" Aufsatzbürste an der Farbe des Betätigungsstücks 7 erkennt.

Das Betätigungsstück 7 umfasst dabei zwei Entriegelungsabschnitte 8 jeweils in Form eines axial in Aufsatzteillängsrichtung nach innen in das Anschlussstück 3 hinein vorspringenden Betätigungsfingers 21. Diese Betätigungsfinger 21 greifen dabei vorteilhafterweise in die von dem Kupplungseinsatz 5 gebildete Aufnahme 13 hinein, und zwar im Bereich der freien Enden der Eingriffsfinger 12. Dabei sind an den vorspringenden Enden der Betätigungsfinger 21 Schrägflächen 10 vorgesehen, die dazu bestimmt sind, mit Schrägflächen (9) an den vorspringenden Enden der Eingriffsfinger 12 des Kupplungseinsatzes 5 zusammenzuwirken. Die Schrägflächen 9 und 10 sind dabei derart ausgebildet, dass beim axialen Auflaufen der Eingriffsfinger 12 auf die Betätigungsfinger 21 die Eingriffsfinger 12 radial nach außen gespreizt werden, so dass sie aus den Rastausnehmungen 41 in dem Verbindungsstück 34 des Zahnbürstenhandteils 4 herausgehoben werden.

In der gezeichneten Ausführung ist zur Erzeugung der Axialbewegung der Kupplungseinsatz 5 in dem Anschlussstück 3 axial verschiebbar. Alternativ oder zusätzlich könnte auch das ringförmige Betätigungsstück 7 in dem Anschlussstück 3 axial verschiebbar sein. In der bevorzugten, gezeichneten Ausführung jedoch sitzt das Betätigungsstück 7 durch eine Verrastung 42 an der Innenwandung des Anschlussstückes 3 fest an dem Anschlussstück 3.

Wie insbesondere Figur 2 zeigt, ist auch die Kupplungsschnittstelle zwischen der Aufsteckwelle 29 und der Antriebswelle 31 durch ein quer zur Aufsatzteillängsrichtung 38 bewegbares Eingriffsteil formschlüssig verriegelbar. In der gezeichneten Ausführung wird das genannte Eingriffsteil 106 von einem um eine Querachse 140 schwenkbaren Eingriffsfinger 112 gebildet, der an seiner Innenmantelfläche einen Rastvorsprung in Form eines Rasthakens 111 besitzt, der zur Innenseite der für die Antriebswelle 31 vorgesehenen Aufnahmeausnehmung 43 vorspringt. In der gezeichneten Ausführung ist der genannte Eingriffsfinger 112 in vorteilhafter Weise integral einstückig an den Korpus der Aufsteckwelle 29 angeformt. Die Schwenkachse bzw. Querachse 140 kann durch eine gezielte Materialschwächung definiert werden, vgl. Figur 2. In der gezeichneten Ausführung ist der Rasthaken 111 dabei vorteilhafterweise in Form eines angeschrägten Vorsprungs ausgebildet, der passgenau in eine im Querschnitt etwa V-förmige, sich quer erstreckende Sicherungsausnehmung 131 in der Antriebswelle 31 einfügt, vgl. Figur 2.

Zur Betätigung des genannten Eingriffsfingers 112 ist ein Betätigungsteil 107 in Form eines Zughakens 132 vorgesehen, der an dem zuvor beschriebenen hülsenförmigen Kupplungseinsatz 5 integral einstückig angeformt ist und von diesem stirnseitig bis in den Bereich der Antriebswellenschnittstelle vorspringt. Der Zughaken 132 übergreift dabei das der Querachse 140 abgewandte Ende des Eingriffsfingers 112, wobei an den sich übergreifenden Enden des Eingriffsfingers 112 und des Zughakens 132 ein Schrägflächenpaar 109 und 110 vorgesehen ist, so dass beim Auflaufen des Eingriffsfingers 112 auf den Zughaken 132 bzw. umgekehrt die axiale Relativbewegung zwischen beiden Teilen in eine radiale Stellbewegung des Eingriffsfingers 112 umgesetzt wird.

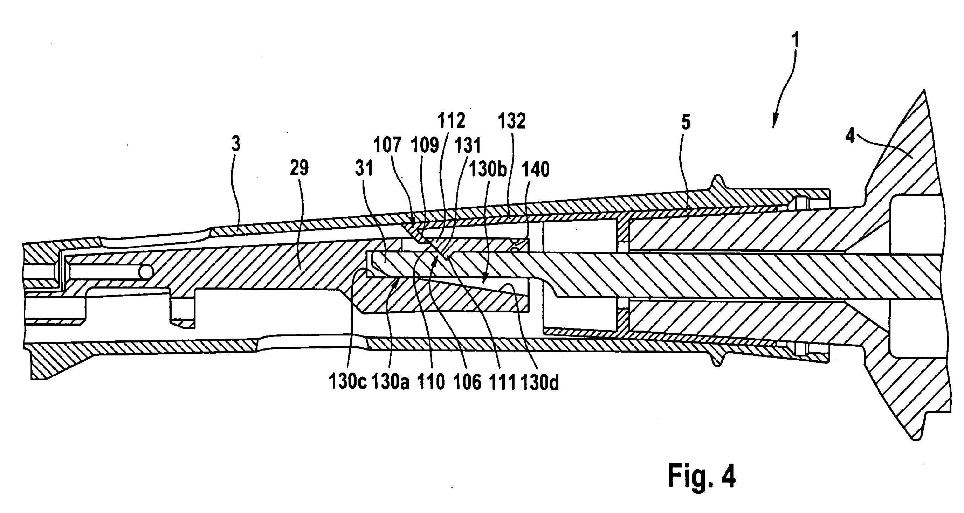

Wie der vergrößerte Ausschnitt von Figur 4 zeigt, ist die sacklochförmige Aufnahme 43 in der Aufsteckwelle 29 dabei mit zwei voneinander unabhängig wirksamen Kupplungskonturen 130a und 130b ausgestattet. Die erste der beiden Kupplungskonturen 130a wird dabei von dem beschriebenen Eingriffsfinger 112 und einer diesem zugeordneten Einsteckkontur der Aufnahme 43 gebildet, die grundsätzlich einen zylindrischen Abschnitt 130c besitzen kann. In der gezeichneten Ausführung ist eine hierzu komplementäre, an ihrem Eingriffsabschnitt insgesamt zylindrisch ausgebildete Antriebswelle 31 eingesteckt, deren Querschnitt zweckmäßigerweise nicht kreiszylindrisch ist, sondern auf einer Seite eine Abflachung aufweist, um eine entsprechende Drehmomentübertragung zu gewährleisten. Die Sicherung der Antriebswelle 31 an der Aufsteckwelle 29 erfolgt dabei über den querbeweglichen Eingriffsfinger. Die zweite der beiden Kupplungskonturen 130b befindet sich axial von der ersten Kupplungskontur 130a beabstandet und ist in der gezeichneten Ausführung vom Ende der Aufsteckwelle 29 her betrachtet vor der genannten ersten Kupplungskontur 130a angeordnet. Sie besteht in der gezeichneten Ausführung aus einem insgesamt konischen Abschnitt der Aufnahme 43, der eine in der gezeichneten Ausführung eben ausgebildete, zur Längsachse der Aufsteckwelle 29 schräg angestellte Schrägfläche 130d besitzt, deren Schrägungswinkel vorteilhafterweise mehr als 7° beträgt. Wie insbesondere Figur 4 näher zeigt, erstreckt sich die konische zweite Kupplungskontur vorteilhafterweise bis in den Bereich des Rasthakens 111 hinein, so dass ggf. die zweite Kupplungskontur auch im Zusammenspiel mit dem Rasthaken 111 des Eingriffsfingers 112 genutzt werden kann. In der in den Figuren 2 und 4 gezeichneten Ausführung wird allerdings die genannte zweite Kupplungskontur 130b nicht genutzt, da die Antriebswelle 31 des Zahnbürstenhandteils 4 in der genannten Weise zylindrisch ausgebildet ist.

Damit ergibt sich folgende Funktion:
Beim Aufstecken der Aufsatzbürste 33 auf das Zahnbürstenhandteil 4 fädelt das Verbindungsstück 34 in die Aufnahme 13 des Kupplungseinsatzes 5 ein, wobei die Rasthaken 11 unter Aufspreizung der Eingriffsfinger 12 über die Außenmantelfläche des Verbindungsstückes 34 hinweggleiten. Bei Erreichen der gänzlich aufgeschobenen Stellung federn die Eingriffsfinger 12 radial nach innen, so dass die Rasthaken 11 in den Rastausnehmungen 41 einschnappen. Der Kupplungseinsatz 5 bildet einen Schnapper, der sich beim Aufschieben auf das Zahnbürstenhandteil 4 automatisch an diesem verriegelt. In der verriegelten Stellung sitzt das Verbindungsstück 34 passgenau in der konischen Aufnahme 13. Ebenso ist der Kupplungseinsatz 5 passgenau in der Einsatzausnehmung 16 des Anschlussstücks 3 aufgenommen.

Um die formschlüssige Verriegelung zu lösen, braucht lediglich die Aufsatzbürste 33 in Aufsatzteillängsrichtung 38 von dem Zahnbürstenhandteil 4 abgezogen werden. Hierbei kommt es zunächst zu einer axialen Relativbewegung des Anschlussstücks 3 gegenüber dem Kupplungseinsatz 5, da letzterer durch die Rasthaken 11 axial fest an dem Zahnbürstenhandteil 4 gehalten wird. Durch diese axiale Relativbewegung fahren die Betätigungsfinger 21 des Betätigungsstücks 7 unter die Eingriffsfinger 12 bzw. die Rasthaken 11, so dass die Eingriffsfinger 12 über das Schrägflächenpaar 9 und 10 radial aus den Rastausnehmungen 41 herausgehoben werden. Bei der axialen Relativbewegung zwischen dem Kupplungseinsatz 5 und dem Anschlussstück 3 kommt es zu einer entsprechenden Verformung der Federabschnitte 18 und 19 der Feder 17.

Sind die Eingriffsfinger 12 mit ihren Rasthaken 11 gegenüber dem Zahnbürstenhandteil 4 entriegelt, wird der Kupplungseinsatz 5 zusammen mit dem Anschlussstück 3 von dem Handteil 4 abgezogen. Durch die Feder 17 stellt sich der Kupplungseinsatz 5 dabei in seine Ausgangsstellung zurück. Diese Federrückstellung ist zwar vorteilhaft, jedoch nicht zwangsweise nötig. Durch die konische Ausbildung der Aufnahme 13 und/oder einen ggf. vorgesehenen Mitnehmer würde der Kupplungseinsatz 5 beim erneuten Aufstecken auf das Zahnbürstenhandteil 4 auch ohne die Feder 17 in seine verriegelnde Stellung zurückgeschoben werden.

Gleichzeitig bewirkt die Axialbewegung des Kupplungseinsatzes 5 bzw. des daran angeformten Zughakens 132 ein Lösen der Verriegelung zwischen der Aufsteckwelle 29 und der Antriebswelle 31. Über das Schrägflächenpaar 109 und 110 zieht die Axialbewegung des Zughakens 132 relativ zu dem Eingriffsfinger 112 letzteren radial nach außen, wodurch er aus der Sicherungsausnehmung 131 der Antriebswelle 31 herausgezogen wird. Hierdurch kann auch die Antriebswelle 31 von der Aufsteckwelle 29 abgezogen werden.

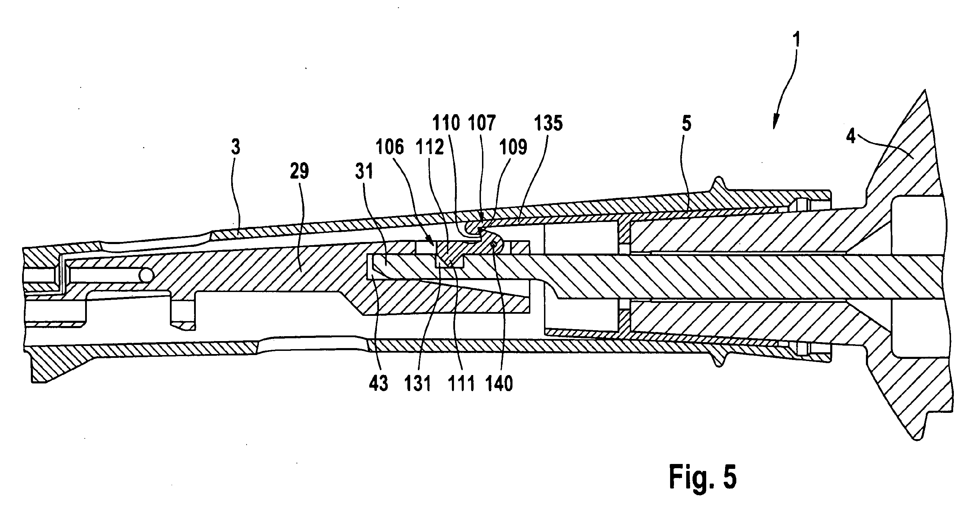

Eine alternative Ausbildungsmöglichkeit der Antriebswellenschnittstelle und ihrer Verriegelung zeigt Figur 5. Auch hier ist das die Verriegelung bewirkende Eingriffsteil der Aufsteckwelle 29 in Form eines schwenkbaren Eingriffsfingers 112 mit einem nach innen vorspringenden Rasthaken 111 ausgebildet, wobei der genannte Eingriffsfinger 112 sozusagen einen schwenkbaren Riegel bzw. eine Klinke bildet. Der Eingriffsfinger 112 ist hierbei separat vom restlichen Korpus der Aufsteckwelle 29 ausgebildet und in einer sich in Axialrichtung erstreckenden Aussparung 106 im Bereich der Aufnahme 43 angeordnet, so dass der Rasthaken 111 nach innen in die Aufnahme 43 vorspringt, vgl. Figur 5. Die sich quer erstreckende Schwenkachse 140 kann beispielsweise durch einen Achsstift gebildet sein.

In der in Figur 5 gezeichneten Ausführung wird der Eingriffsfinger 112 wiederum durch einen von dem Kupplungseinsatz 5 axial vorstehenden Funktionsarm 135 betätigt, der das Betätigungsteil 107 bildet. Insbesondere sind zur Betätigung des schwenkbaren Eingriffsfingers 112 nockenartige Schrägflächen 109 und 110 an dem vorderen Ende des Funktionsarms 135 und dem Eingriffsfinger 112 vorgesehen, wobei die Schrägfläche 109 an dem Eingriffsfinger 112 bezüglich dessen Schwenkachse 140 einen Hebelarm besitzt und in der gezeichneten Ausführung zwischen der genannten Schwenkachse 140 und dem Rasthaken 111 angeordnet ist, vgl. Figur 5.

Die sich hierdurch ergebende Funktion entspricht im wesentlichen der zuvor beschriebenen Ausführung nach den Figuren 1 bis 4.

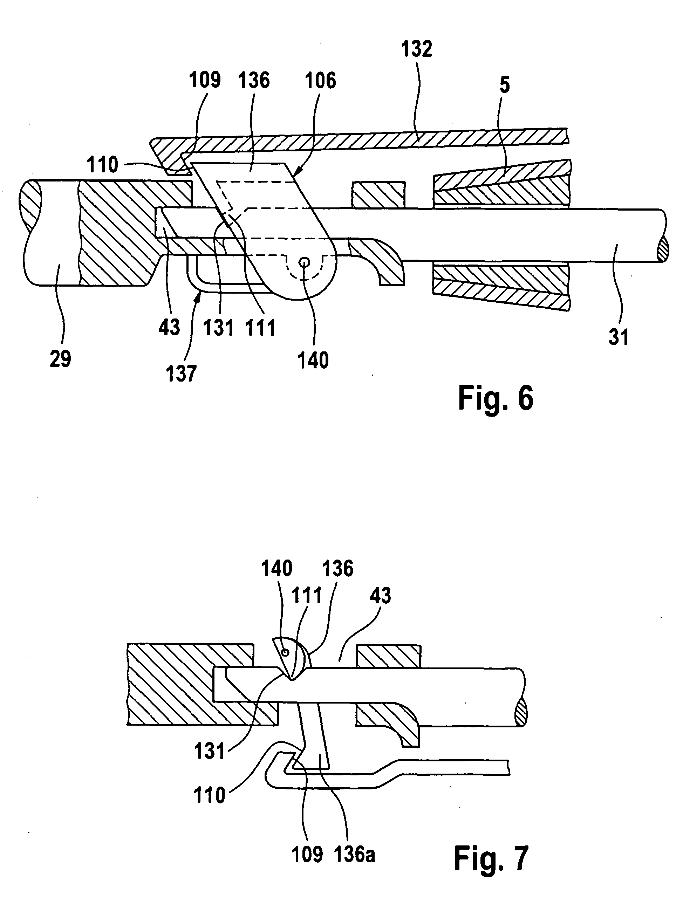

Eine weitere Variante des Eingriffsteils 106 zeigt Figur 6, wonach das Eingriffsteil 106 von einer schwenkbaren Klinke 136 gebildet ist, welche sich quer über die Aufnahme 43 in der Aufsteckwelle 29 hinwegerstreckt. Ähnlich den zuvor beschriebenen Ausführungen weist auch die Rastklinke 136 einen Rasthaken 111 auf, welcher dazu vorgesehen ist, in die Sicherungsausnehmung 131 der Antriebswelle 31 einzugreifen. Die Rastklinke 136 ist in der Ausführung nach Figur 6 jedoch auf der gegenüberliegenden Seite des Rasthakens 111 an der Aufsteckwelle 29 gelagert, und zwar um eine sich ebenfalls quer erstreckende Schwenkachse 140, vgl. Figur 6. Mittels einer Federeinrichtung 137 ist die Rastklinke 136 dabei in ihre verrastende Stellung vorgespannt, wobei in der gezeichneten Ausführung die Federeinrichtung 137 von einem an die Aufsteckwelle 29 angeformten Federarm gebildet sein kann.

Zur Betätigung der Rastklinke 136 ist wiederum ein Betätigungsteil 107 in Form eines Zughakens 132 vorgesehen, welcher von dem Kupplungseinsatz 5 axial bis in den Bereich der Antriebswellenschnittstelle vorspringt. Über ein Schrägflächenpaar 109 und 110 wird analog der Ausführung nach den Figuren 1 bis 4 die Betätigung der Rastklinke 136 bewirkt.

Figur 7 zeigt eine der Figur 6 ähnliche Ausbildung der Verriegelung zwischen den beiden Wellen 29 und 31. Auch hier erstreckt sich die Rastklinke 136 quer über die Aufnahme 43 in der Aufsteckwelle 29 hinweg, allerdings sind im Gegensatz zur Ausführung der Figur 6 die sich quer erstreckende Schwenkachse 140 und der Rasthaken 111 auf derselben Seite der Antriebswelle 31 angeordnet. Der sich auf die gegenüberliegende Seite der Aufnahme 43 erstreckende Abschnitt 136a der Rastklinke 136 bildet einen Betätigungsarm, welcher über ein Schrägflächenpaar 109 und 110 analog der zuvor beschriebenen Ausführung durch den Zughaken 132 betätigt werden kann.

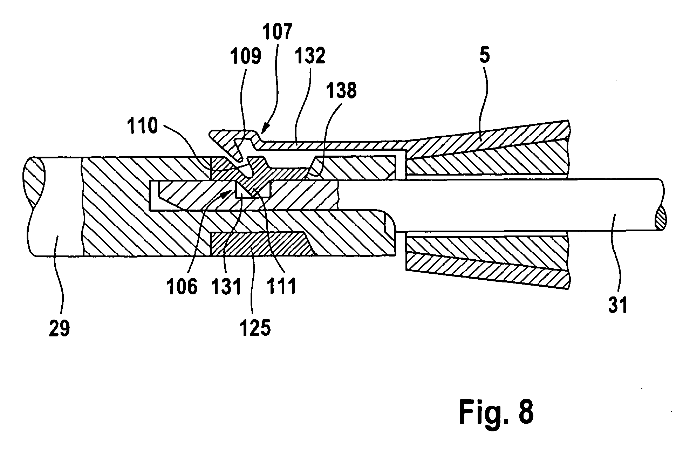

Eine weitere Ausführung der Verriegelung zwischen der Aufsteckwelle 29 und der Antriebswelle 31 zeigt Figur 8. Nach dieser Ausführung ist an der Aufsteckwelle 29 ein die Verriegelung bewirkendes Eingriffsteil 106 in Form eines radial aufweitbaren und verjüngbaren Rastrings 125 vorgesehen, der beispielsweise längsgeschlitzt ausgebildet sein kann und hierdurch aufgeweitet werden kann. Vorteilhafterweise ist der Rastring 125 dabei derart ausgebildet, dass er elastisch in seine verriegelnde, verjüngte Stellung vorgespannt ist. Wie Figur 8 zeigt, besitzt der Rastring 125 an seiner Innenmantelfläche eine nach innen vorspringende Rastkontur in Form eines Rasthakens 111, der in eine Sicherungsausnehmung 131 in der Antriebswelle 31 eingreift.

Der Rastring 125 sitzt dabei in einer Umfangsausnehmung auf dem Korpus der Aufsteckwelle 29. Im Bereich des genannten Rasthakens 111 besitzt der Rastring 125 an seiner Außenmantelfläche eine Eingriffsausnehmung, die mit dem Zughaken 132 zusammenwirkt, der wiederum an dem Kupplungseinsatz 5 axial vorspringend angeformt ist. Hierbei kann wiederum ein Schrägflächenpaar 109 und 110 an dem Rastring 125 und dem Zughaken 132 vorgesehen sein. Unterstützend kann auch die Ausnehmung in der Außenmantelfläche der Aufsteckwelle 29 und/oder die daran anstoßende stirnseitige Kante des Rastrings 125 eine Aufweitschräge 138 besitzen, so dass durch eine Axialbewegung des Rastrings 125 gegenüber dem Korpus der Aufsteckwelle 29 mittels des Zughakens 132 eine Aufweitbewegung erreicht wird.

Die Funktion der Verriegelung der Antriebswellenschnittstelle ergibt sich analog den zuvor beschriebenen Ausführungen.

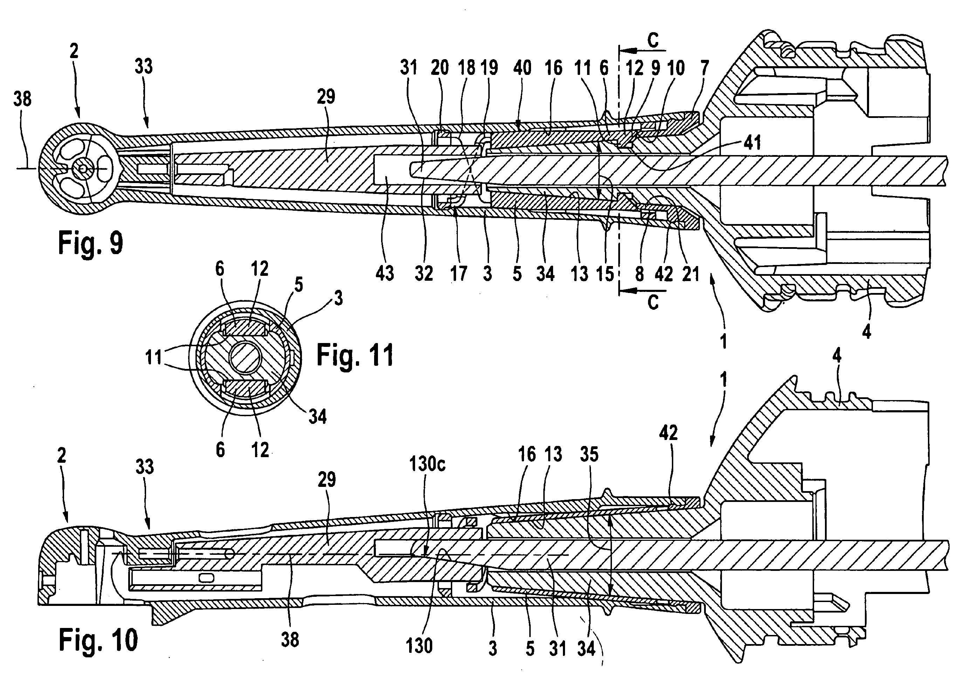

Die Figuren 9 bis 11 zeigen eine Ausführung, welche nicht Teil der Erfindung, ist die grundsätzlich ähnlich der Ausführung nach den Figuren 1 bis 3 ist. Soweit der Ausführung nach Figuren 1 bis 3 entsprechende Bauteile vorhanden sind, tragen diese dieselben Bezugsziffern. Wesentlicher Unterschied ist die Ausbildung der Kupplungsschnittstelle im Antriebsstrang. Wie insbesondere Figur 10 zeigt, wird die Aufsteckwelle 29 der Aufsatzbürste 33 in der gezeichneten Ausführung mit der handteilseitigen Antriebswelle 31 allein durch konische Passflächen gekuppelt, wobei die Antriebswelle 31 an ihrem aus dem Gehäuse des Handteils 4 herausschauenden Ende konisch ausgebildet ist und ein Schrägungswinkel ebenfalls mehr als 7° betragen kann. Die Aufsteckwelle 29 besitzt eine daran formangepasste, stirnseitig offene, vorteilhafterweise sacklochförmige Aufnahme 43, die eine an die Konizität der Antriebswelle 31 angepasste Passfläche 130c umfasst, die ebenfalls einen Schrägungswinkel von mehr als 7° besitzt. Durch das feste Aufstecken der Aufsatzbürste 33 kann eine form- und/oder reibschlüssige Verbindung zwischen der Aufsteckwelle 29 und der Antriebswelle 31 erzielt werden. Die Verbindung zwischen den Wellen kann dabei frei von axial wirksamen Schnappverbindungen oder anderweitigen axialen Haltemitteln ausgebildet sein.

Soll sichergestellt werden, dass von den beiden Kupplungskonturen 130a und 130b der Aufsteckwelle 29 nur eine benutzt wird, beispielsweise um sicherzustellen, dass ein Benutzer nur "seine" Aufsatzbürste bzw. Zahnbürste benutzen kann, kann eine der beiden Kupplungskonturen 130a und 130b durch unlösbares Einsetzen eines Adapterstücks abgedeckt und sozusagen totgeschaltet werden. Beispielsweise könnte in die Ausnehmung 43 der Aufsteckwelle 29 ein Adapterstück unlösbar eingesetzt werden, dass die erste Kupplungskontur 130a verschließt, so dass nur noch die konische zweite Kupplungskontur 130b benutzbar ist. Alternativ oder zusätzlich könnte ein solches Adapterstück auch handteilseitig vorgesehen werden, insbesondere auf die Antriebswelle 31 des Zahnbürstenhandteils 4 aufgesteckt werden. Beispielsweise könnte hier ein konisches Adapterstück auf die beispielsweise in Figur 4 gezeigte Antriebswelle 31 aufgeschoben und an der dortigen Sicherungsausnehmung 131 unlösbar verschnappt werden, so dass eine Kupplung mit der konischen zweiten Kupplungskontur 130b bewirkt werden kann.

## Patentansprüche

1. Aufsatzteil, insbesondere -bürste, für eine elektrische Zahnbürste, mit einem Arbeitskopf (2) sowie einem mit dem Arbeitskopf (2) verbundenen, rohrförmigen Anschlussstück (3), das auf ein Zahnbürstenhandteil (4) aufsetzbar ist, wobei eine Aufsteckwelle (29) zum Antreiben des Arbeitskopfs (2) in dem Anschlussstück (3) vorgesehen ist und eine Kupplungskontur (130) zur formschlüssigen Kupplung mit einer an dem Zahnbürstenhandteil (4) vorgesehenen Antriebswelle (31) besitzt, wobei die genannte Kupplungskontur (130) ein quer zur Aufsatzteillängsrichtung bewegbares Eingriffsteil zur form- und/oder reibschlüssigen Verriegelung mit der Antriebswelle (31) aufweist, **dadurch gekennzeichnet, dass** das quer bewegliche Eingriffsteil (106) und/oder ein an dem Anschlußstück vorgesehenes Betätigungsteil (107) in Aufsatzteillängsrichtung bewegbar sind, wobei das Eingriffsteil (106) mit dem Betätigungsteil in Eingriff bringbar ist derart, dass eine Bewegung des Betätigungsteils (107) und/oder des Eingriffsteils (106) in Aufsatzteillängsrichtung eine Ent- oder Verriegelungsbewegung des Eingriffsteils (106) quer zur Aufsatzteillängsrichtung erzeugt.

2. Aufsatzteil nach dem vorhergehenden Anspruch, wobei das Betätigungsteil (107) einen Entriegelungsabschnitt (108) besitzt, der derart angeordnet und ausgebildet ist, dass bei einer Axialbewegung des Betätigungsteils (107) von dem Arbeitskopf (2) weg der Entriegelungsabschnitt (108) mit dem Eingriffsteil (106) in Eingriff bringbar ist und das Eingriffsteil (106) in eine entriegelte Stellung zwingt.

3. Aufsatzteil nach einem der vorhergehenden Ansprüche, wobei an dem Eingriffsteil (106) und dem Betätigungsteil (107) ein Schrägflächenpaar (109, 110) vorgesehen ist, das beim Auflaufen des Eingriffsteils (106) auf das Betätigungsteil (107) die Ent- und/oder Verriegelungsbewegung erzeugt.

4. Aufsatzteil nach einem der vorhergehenden Ansprüche, wobei das Eingriffsteil (106) eine Rastkontur, insbesondere einen Rasthaken (111), aufweist, die am auskragenden Ende eines federnd ausgebildeten und/oder um eine Querachse schwenkbaren Eingriffsfingers (112) vorgesehen ist und von dem Betätigungsteil (107) radial bewegbar ist.

5. Aufsatzteil nach einem der Ansprüche 1 bis 3, wobei das Eingriffsteil (106) einen radial aufweitbaren und verjüngbaren Rastring (125) aufweist, der eine Keilfläche (110) aufweist und/oder von einer Keilfläche (109) an dem Betätigungsteil (107) bei axialem Auflaufen in Aufsatzteillängsrichtung von dem Betätigungsstück (107) radial aufweitbar ist.

6. Aufsatzteil nach einem der vorhergehenden Ansprüche, wobei das Betätigungsteil (107) mit einem in dem Anschlussstück (3) vorgesehenen, vorzugsweise hülsenförmigen Kupplungseinsatz (5) zur Ankupplung des Anschlußstücks an einen Hals des Zahnbürstenhandteils (4) verbunden ist, der relativ zu dem Anschlussstück (3) axial in Aufsatzteillängsrichtung verschiebbar ist.

7. Aufsatzteil nach dem vorhergehenden Anspruch, wobei der Kupplungseinsatz (5) mit einem Eingriffsabschnitt (6) zur form- und/oder reibschlüssigen Verriegelung des Halses des Zahnbürstenhandteils (4) verbunden ist derart, dass eine axiale Bewegung des Kupplungseinsatzes (5) relativ zum Anschlussstück (3) eine Entriegelungs- und/oder Verriegelungsbewegung des Eingriffsabschnitts (6) quer zur Aufsatzteillängsrichtung erzeugt.

8. Aufsatzteil nach einem der beiden vorhergehenden Ansprüche, wobei der Kupplungseinsatz (5) eine Hülse bildet und eine zylindrische oder konische Aufnahme (13) besitzt, in die ein ebenfalls zylindrisches bzw. konisches Verbindungsteil des Halses des Zahnbürstenhandteils (4) und/oder ein darauf aufgeschobenes Adapterstück passgenau einsteckbar ist.

9. Aufsatzteil nach dem vorhergehenden Anspruch, wobei die konische Aufnahme (13) des Kupplungseinsatzes (5) einen Schrägungswinkel (15) von mehr als 7° aufweist und/oder frei von Selbsthemmung ausgebildet ist.

10. Aufsatzteil nach einem der Ansprüche 1 bis 5, wobei das Betätigungsteil (107) einen axial in Aufsatzteillängsrichtung verschiebbaren Schieber umfasst.

11. Aufsatzteil nach einem der vorhergehenden Ansprüche, wobei das Eingriffsteil (106) der Kupplungskontur (130) der Aufsteckwelle (29) einen Rastklips und/oder einen Schnapper bildet, der beim Aufstecken des Anschlussstücks (3) auf das Zahnbürstenhandteil (4) über dessen Antriebswelle (31) gleitet, dabei elastisch wegfedert und bei Erreichen der gänzlich aufgesteckten Stellung formschlüssig einschnappt.

12. Aufsatzteil nach dem vorhergehenden Anspruch, wobei der Rastklips und/oder Schnapper durch eine axiale Relativbewegung zwischen dem Betätigungsstück (7) und dem Kupplungseinsatz (5) aus seiner eingeschnappten Stellung aushebbar ist.

13. Aufsatzteil nach einem der vorhergehenden Ansprüche, wobei die Kupplungskontur (130) eine konische Passfläche oder mehrere am Umfang verteilte Paßflächen aufweist.

14. Aufsatzteil nach dem vorhergehenden Anspruch, wobei die konischen Passflächen einen Schrägungswinkel von mehr als 7° aufweisen.

15. Zahnbürste mit einem Aufsatzteil nach einem der vorhergehenden Ansprüche 1 bis 14 und einem Zahnbürstenhandteil (4).

## Claims

1. An attachment piece, in particular a brush attachment, for an electric toothbrush having a working head (2) and a tubular adapter piece (3) connected to the working head (2), which adapter piece (3) is attachable to a toothbrush handle (4), wherein an attachment shaft (29) for driving the working head (2) is provided in the adapter piece (3), and having a coupling contour (130) for form-interlocking coupling with a drive shaft (31) provided on the toothbrush handle (4), wherein the said coupling contour (130) has an engaging piece for form-interlocking and/or friction-locking fastening to the drive shaft (31), which engaging piece is transversally movable in the longitudinal direction of the attachment piece; **characterized in that** the transversely movable engaging piece (106) and/or an actuating piece (107) provided on the adapter piece are/is movable in the longitudinal direction of the attachment piece, wherein the engaging piece (106) can be brought into engagement with the actuating piece, such that a movement of the actuating piece (107) and/or the engaging piece (106) in the longitudinal direction of the attachment piece produces an unlocking or locking movement of the engaging piece (106) transversely to the longitudinal direction of the attachment piece.

2. The attachment piece according to the preceding claim, wherein the actuating piece (107) has an unlocking segment (108) which is disposed and configured such that when the actuating piece (107) is moved axially away from the working head (2), the unlocking segment (108) can be brought into engagement with the engaging piece (106), causing the engaging piece (106) to move into an unlocked position.

3. The attachment piece according to any one of the preceding claims, wherein a pair of inclined surfaces (110, 109) is provided on the engaging piece (106) and the actuating piece (107), which pair causes an unlocking and/or locking movement when the engaging piece (106) comes into contact with the actuating piece (107).

4. The attachment piece according to any one of the preceding claims, wherein the engaging piece (106) has a catch contour, particularly a catch hook (111), provided on the projecting end of an engaging finger (112), which engaging finger is spring-loaded and/or is swingable around a transverse axis, and the engaging piece (106) is radially movable by the actuating piece (107).

5. The attachment piece according to any one of claims 1 to 3, wherein the engaging piece (106) has a radially expandable and narrowable catch ring (125) which has an inclined surface (110) and/or is radially expandable by an inclined surface (109) on the actuating piece (107) when it comes into contact with the actuating piece (107) by axial movement in the longitudinal direction of the attachment piece.

6. The attachment piece according to any one of the preceding claims, wherein the actuating piece (107) is connected to a preferably sleeve-shaped coupling insert (5) provided in the adapter piece (3) for coupling the adapter piece (3) to a neck of the toothbrush handle (4), which insert (5) is displaceable relative to the adapter piece (3) axially in the longitudinal direction of the attachment piece.

7. The attachment piece according to the preceding claim, wherein the coupling insert (5) is connected with an engaging segment (6) for form-interlocking and/or friction-locking fastening of the neck of the toothbrush handle (4), such that an axial movement of the coupling insert (5) relative to the adapter piece (3) produces an unlocking and/or locking movement of the engaging segment (6) transversely to the longitudinal direction of the attachment piece.

8. The attachment piece according to one of the two preceding claims, wherein the coupling insert (5) forms a sleeve and has a cylindrical or conical recess (13) into which an also cylindrical and/or conical connecting piece of the neck of the toothbrush handle (4) and/or an adapter piece pushed onto it can be inserted in a manner that produces a snug fit.

9. The attachment piece according to the preceding claim, wherein the conical recess (13) of the coupling insert (5) has an angle of inclination (15) of more than 7° and/or is formed to be free from self-locking.

10. The attachment piece according to any one of claims 1 to 5, wherein the actuating piece (107) comprises a slide element which is axially displaceable in the longitudinal direction of the attachment piece.

11. The attachment piece according to any one of the preceding claims, wherein the engagement piece (106) of the coupling contour (130) of the attachment shaft (29) forms a locking clip and/or a snapper wherewith, when the adapter piece (3) is pushed onto the toothbrush handle (4), the engagement piece slides over the drive shaft (31) associated with the handle, in a manner such that the engagement piece is elastically pushed away, and when the completely pushed-on state is reached, the engagement piece then snaps into a form-interlocking state.

12. The attachment piece according to the preceding claim, wherein the locking clip and/or snapper can be lifted from its snapped-in position by an axial relative movement between the actuating piece (7) and the coupling insert (5).

13. The attachment piece according to any one of the preceding claims, wherein the coupling contour (130) has a conical matching surface or multiple matching surfaces distributed around the periphery.

14. The attachment piece according to the preceding claim, wherein the conical matching surfaces have an angle of inclination of greater than 7°.

15. A toothbrush with an attachment piece according to any one of the preceding claims 1 to 14 and a toothbrush handle (4).

## Revendications

1. Partie embout, en particulier embout de brosse, pour une brosse à dents électrique, comportant une tête active (2) ainsi qu'un élément de raccordement tubulaire (3) relié à la tête active (2), lequel peut être placé sur une partie poignée (4) de la brosse à dents, dans laquelle une broche d'enfichage (29) est prévue pour entraîner la tête active (2) dans l'élément de raccordement (3) et possède un contour d'accouplement (130) pour l'accouplement par complémentarité de forme avec une broche d'entraînement (31) prévue dans la partie poignée de la brosse à dents (4), dans laquelle le contour d'accouplement précité (130) présente une partie engrènement mobile dans le sens transversal par rapport à la direction de la longueur de la partie embout pour un verrouillage par complémentarité de forme ou par friction avec la broche d'entraînement (31), **caractérisée en ce que** la partie engrènement mobile dans le sens transversal (106) et/ou une partie d'actionnement (107) prévue sur l'élément de raccordement est mobile dans la direction de la longueur de la partie embout, dans laquelle la partie engrènement (106) peut être amenée en prise avec la partie d'actionnement de sorte qu'un mouvement de la partie d'actionnement (107) et/ou de la partie engrènement (106) dans la direction de la longueur de la partie embout produit un mouvement de verrouillage ou de déverrouillage de la partie engrènement (106) dans le sens transversal par rapport à la direction de la longueur de la partie embout.

2. Partie embout selon la revendication précédente, dans laquelle la partie d'actionnement (107) possède une section de déverrouillage (108), qui est agencée et formée de telle sorte que, lors d'un mouvement axial de la partie d'actionnement (107) en s'éloignant de la tête active (2), la section de déverrouillage (108) peut se mettre en prise avec la partie engrènement (106) et la partie engrènement (106) est amenée de force vers une position déverrouillée.

3. Partie embout selon l'une des revendications précédentes, dans laquelle deux surfaces obliques (109, 110) sont prévues sur la partie engrènement (106) et la partie d'actionnement (107), qui, lorsque la partie engrènement (106) monte sur la partie d'actionnement (107) produisent le mouvement de déverrouillage et/ou de verrouillage.

4. Partie embout selon l'une des revendications précédentes, dans laquelle la partie engrènement (106) présente un contour d'encliquetage, en particulier un crochet d'encliquetage (111), qui est placé sur l'extrémité en surplomb d'un doigt d'engrènement (112) formé pour être actionné par un ressort et/ou pouvant être orienté autour d'un axe transversal et est mobile dans le sens radial depuis la partie d'actionnement (107).

5. Partie embout selon l'une des revendications 1 à 3, dans laquelle la partie engrènement (106) présente un anneau d'encliquetage (125) pouvant être agrandi et rétréci, qui comporte une surface de coin (110) et/ou est extensible dans le sens radial depuis une surface de coin (109) sur la partie d'actionnement (107) lorsque l'élément d'actionnement (107) monte dans le sens axial, dans la direction de la longueur de la partie embout.

6. Partie embout selon l'une des revendications précédentes, dans laquelle la partie d'actionnement (107) est reliée à un insert d'accouplement (5) prévu sur l'élément de raccordement (3), de préférence en forme de manchon, pour l'accouplement de l'élément de raccordement sur un manche de la partie poignée de la brosse à dents (4), qui peut être amené à coulisser par rapport à l'élément de raccordement (3) dans le sens axial dans la direction de la longueur de la partie embout.

7. Partie embout selon la revendication précédente, dans laquelle l'insert d'accouplement (5) est relié à une section d'engrènement (6) pour le verrouillage par complémentarité de forme ou par friction du manche de la partie poignée de la brosse à dents (4), de telle sorte qu'un mouvement axial de l'insert d'accouplement (5) par rapport à l'élément de raccordement (3) entraîne un mouvement de verrouillage et/ou de déverrouillage de la section d'engrènement (6) dans le sens transversal par rapport à la direction de la longueur de la partie embout.

8. Partie embout selon l'une des deux revendications précédentes, dans laquelle l'insert d'accouplement (5) forme un manchon et possède un évidement cylindrique ou conique (13), dans lequel une partie de liaison également cylindrique ou conique du manche de la partie poignée de la brosse à dents (4) et/ou un élément d'adaptation placé sur celle-ci peut être ajustée exactement.

9. Partie embout selon la revendication précédente, dans laquelle l'évidement conique (13) de l'insert d'accouplement (5) présente un angle d'hélice (15) de plus de 7° et/ou est formé librement par l'auto-blocage.

10. Partie embout selon l'une des revendications 1 à 5, dans laquelle la partie d'actionnement (107) comprend un coulisseau pouvant être déplacé dans le sens axial dans la direction de la longueur de la partie embout.

11. Partie embout selon l'une des revendications précédentes, dans laquelle la partie engrènement (106) du contour d'accouplement (130) de la broche d'enfichage (29) forme une lèvre d'encliquetage et/ou un cran, qui glisse lorsque l'élément de raccordement (3) s'élève depuis la partie poignée de la brosse à dents (4) au-dessus de sa broche d'entraînement (31), étant ainsi poussé par un ressort de manière élastique et s'encliquète lorsqu'il atteint la position totalement encliquetée par complémentarité de forme.

12. Partie embout selon la revendication précédente, dans laquelle la lèvre d'encliquetage et/ou le cran peut être sorti par un mouvement axial relatif entre l'élément d'actionnement (7) et l'insert d'accouplement (5) de sa position encliquetée.

13. Partie embout selon l'une des revendications précédentes, dans laquelle le contour d'accouplement (130) présente une surface de passage conique ou plusieurs surfaces de passage partagées sur le bord.

14. Partie embout selon la revendication précédente, dans laquelle les surfaces de passage coniques présentent un angle d'hélice supérieur à 7°.

15. Brosse à dents avec une partie embout selon l'une des revendications précédentes 1 à 14 et/ou une partie poignée de brosse à dents (4).
